# EUROPÄISCHE PATENTSCHRIFT

(11) **EP 0 310 595 B1**
(45) Veröffentlichungstag und Bekanntmachung des Hinweises auf die Patenterteilung: **24.02.1993**
(21) Anmeldenummer: 88890252.5
(22) Anmeldetag: 30.09.1988
(51) Int. Cl.: F16K 47/00, F16K 17/34

(54) **Regelventil**
Regulating valve
Vanne de régulation

(30) Priorität: 02.10.1987 AT 2511/87
(43) Veröffentlichungstag der Anmeldung: 05.04.1989
(73) Patentinhaber: Otto Bock Orthopädische Industrie Besitz- und Verwaltungs-Kommanditgesellschaft, 37115 Duderstadt (DE)
(72) Erfinder: Horvath, Eduard, A-1070 Wien (AT)
(74) Vertreter: Casati, Wilhelm, Dipl.-Ing.

(56) Entgegenhaltungen:
- DE-A- 2 120 594
- FR-A- 2 329 919
- US-A- 4 697 616

## Beschreibung

Die Erfindung bezieht sich auf ein Regelventil zur Steuerung des Durchflusses von Flüssigkeiten, wobei innerhalb eines mit Zulauf und Ablauf versehenen Raumes, der, zumindest über Teile des Umfangsbereiches, durch eine Zylindermantelfläche, vorzugsweise mit kreiszylindrischem Querschnitt, begrenzt ist, ein Drosselorgan in Form deformierbarer Wände einer druckbeaufschlagten Kammer vorgesehen ist.

Aus der DE-A- 2 120 594 geht eine Ausbildung der vorstehenden Art hervor, bei welcher die druckbeaufschlagte Kammer durch einen hohlzylindrischen Körper mit elastischem Mantel gebildet ist, der an der in Strömungsrichtung vorderen Stirnseite offen ist, wobei der elastische Mantel in in Strömungsrichtung verlaufende Ausnehmungen der Innenseite der Wandung durch den Flüssigkeitsdruck einpreßbar ist.

Bei der aus der US-A-4,697.616 bekannten Ausbildung ist in einem durchflossenen Rohr ein Strömungskömer eingebaut, an welchem zur Durchflußregelung ein von außen druckbeaufschlagter Balg anlegbar ist, um solcherart den Durchflußquerschnitt zu verändern. Eine selbsttätige Regelung des Durchflusses in Abhängigkeit vom inneren Druck ist bei dieser Ausbildung nicht möglich.

Der Erfindung liegt die Aufgabe zugrunde, ein Regelventil der eingangs genannten Art weiterzubilden.

Erfindungsgemäß wird diese Aufgabe dadurch gelöst, daß der Zulauf an der Kammer angeschlossen ist und daß diese Kammer durch zwei flexible, im wesentlichen parallel zu den Erzeugenden der Zylindermantelfläche verlaufende, bis nahe zu letzterer reichende Lamellen und zwei Endwandungen begrenzt ist, wobei die dem Flüssigkeitsabfluß nächstliegende Endwandung und die Lamellen mit der Zylindermantelfläche einen veränderbaren Spalt definieren. Dadurch wird erreicht, daß unter normalen Dämpfungsbedingungen der Spalt zwischen der dem Flüssigkeitsabfluß nächstliegenden Endwandung und der Zylindermantelfläche sowie der zwischen den Lamellen und der Zylindermantelfläche freibleibende Spalt die Dämpfungswirkung bestimmt. Steigt jedoch der Druck innerhalb der Kammer an, dann verformen sich die flexiblen Lamellen in Richtung zur Zylindermantelfläche hin, wodurch der zwischen den Lamellen und der Zylindermantelfläche freibleibende Spalt verkleinert wird, so daß selbst bei höherem Druck nur jene Flüssigkeitsmenge durch die Drosselspalte hindurchtreten kann, welche zur Zulassung der erforderlichen Bewegung benötigt wird.

Vorteilhafterweise kann die Kammer in einem Ventilkörper ausgebildet sein, der in den durch die Zylindermantelfläche begrenzten Raum eingesetzt ist, wobei der Ventilkörper unterhalb des Kammerbodens einen Einschnitt aufweist, der vorzugsweise parallel zum Kammerboden verläuft. Dadurch wird erreicht, daß bei zu hohem Ansteigen des Innendruckes in der Kammer ein Wegbiegen der gesamten Kammer im Bereich des Einschnittes von der Zylindermantelfläche erfolgt, wodurch vermieden wird, daß durch einen eventuell zu hohen Druckanstieg innerhalb der Kammer Beschädigungen jener Teile auftreten, in denen dann dieser zu hohe Druck herrscht. Dabei kann der die Kammer aufweisende Teil des Ventilkörpers im Bereich der freien Ausmündung des Einschnittes unterstützbar sein, wodurch die Biegebewegung des im Bereich des Einschnittes befindlichen Kammerteiles begrenzbar ist. Außerdem ist dadurch die Kammer an beiden Enden unterstützt, wodurch die Durchbiegebewegung bei übersteigen eines gewissen Druckes im Mittelbereich des den Einschnitt aufweisenden Kammerteiles erfolgt, so daß die Durchbiegebewegung lediglich den zwischen den Lamellenkanten und der Zylinderinnenwandung befindlichen Spalt betrifft. Um die Drosselwirkung des Regelventiles, und zwar bereits die Drosselung des Flüssigkeitsdurchflusses bei normalem Betrieb, regeln zu können, kann die Unterstützung des die Kammer aufweisenden Teiles des Ventilkörpers quer zur Achsrichtung im Sinne einer Veränderung des Spaltes zwischen der zum Flüssigkeitsabfluß weisenden . Endwandung und der Zylindermantelfläche einstellbar sein. Um mehrere Dämpfungsvorgänge gleichzeitig durchführen zu können, können in dem Ventilkörper mehrere, gleich aufgebaute Kammern vorgesehen sein. Von diesen kann jede der Kammern mit einem Einschnitt unterhalb des Kammerbodens versehen sein, wobei vorzugsweise unter jeder Kammer eine einstellbare Unterstützung angeordnet ist, welche jede gegebenenfalls getrennt betätigbar ist. Dadurch ist es möglich, auch bei mehreren durch das Regelventil zu steuernden Durchströmmengen jede einzelne der Dämpfungen den Anforderungen entsprechend einzustellen.

In den Figuren sind einige Ausführungsbeispiele des Erfindungsgegenstandes dargestellt.

Fig. 1 zeigt einen Axialschnitt durch eine einfache Ausführung des Erfindungsgegenstandes.

Fig. 2 ist ein analoger Radialschnitt dazu.

Fig. 3 gibt einen der Fig. 1 analogen Schnitt, jedoch bei einem zweiten Ausführungsbeispiel, wieder.

Fig. 4 ist ein Schnitt nach Linie IV-IV der Fig. 3.

Fig. 5 gibt einen Radialschnitt durch ein weiteres Ausführungsbeispiel wieder, bei welchem in einem zylindrischen Raum mehrere Drosseleinrichtungen vorgesehen sind.

Mit 1 ist ein mit einer Zylindermantelfläche 1′ begrenzter Raum bezeichnet, in welchem eine Kammer 2 angeordnet ist, die durch zwei flexible, im wesentlichen parallel zu den Erzeugenden der Zylindermantelfläche 1′ verlaufende, bis nahe zu letzterer reichende Lamellen 3 und zwei Endwandungen 4, 5 begrenzt ist. Die Kammer 2 ist über die Flüssigkeitszufuhr 9 mit Druck beaufschlagbar, wobei die aus der Kammer 2 in den Raum 1 übergetretene Flüssigkeit über die Flüssigkeitsabfuhr 10 aus dem Raum 1 abgeführt wird. Zwischen den zur Zylindermantelfläche 1′ benachbart verlaufenden Kanten der Lamellen 3 und der Zylindermantelfläche 1′ sowie zwischen der der Zylindermantelfläche 1′ zugewandten Fläche der Endwandung 4 und der Zylindermantelfläche 1′ ist ein Spalt vorgesehen, dessen Größe den Durchflußquerschnitt für die aus der Kammer 2 in den Raum 1 übertretende Flüssigkeit bestimmt.

Wird nun die Kammer 2 über die Flüssigkeitszufuhr 9 mit Druck beaufschlagt, dann wird der Flüssigkeitsdurchgang von der Kammer 2 in den Raum 1 durch den genannten Spalt zwischen den Lamellen 3 und der Zylindermantelfläche 1′ bzw. zwischen der Endwandung 4 und der Zylindermantelfläche 1′ gedrosselt. Übersteigt nun der Druck einen vorgegebenen Wert, so erhöht sich zwangsläufig der Druck innerhalb der Kammer, da dem Durchfluß durch den Spalt ein bestimmter Durchgangswiderstand entgegengesetzt wird. Dadurch werden die beiden Lamellen 3 im Sinne eines Auseinanderbewegens beaufschlagt, wobei sie zufolge ihrer Flexibilität eine Bewegung zur Zylindermantelfläche 1′ ausführen, und dadurch den Durchtrittsspalt zwischen den der Zylindermantelfläche 1′ benachbarten Kanten der Lamellen 3 und der Zylindermantelfläche 1′ verkleinern, so daß aufgrund der Druckerhöhung innerhalb des Raumes 2 es zu keinem verstärkten Flüssigkeitsdurchtritt durch den Drosselspalt in den Raum 1 kommen kann. Es bleibt also die Dämpfung bei einer hydraulischen Kolben-Zylinder-Einheit entsprechend erhalten.

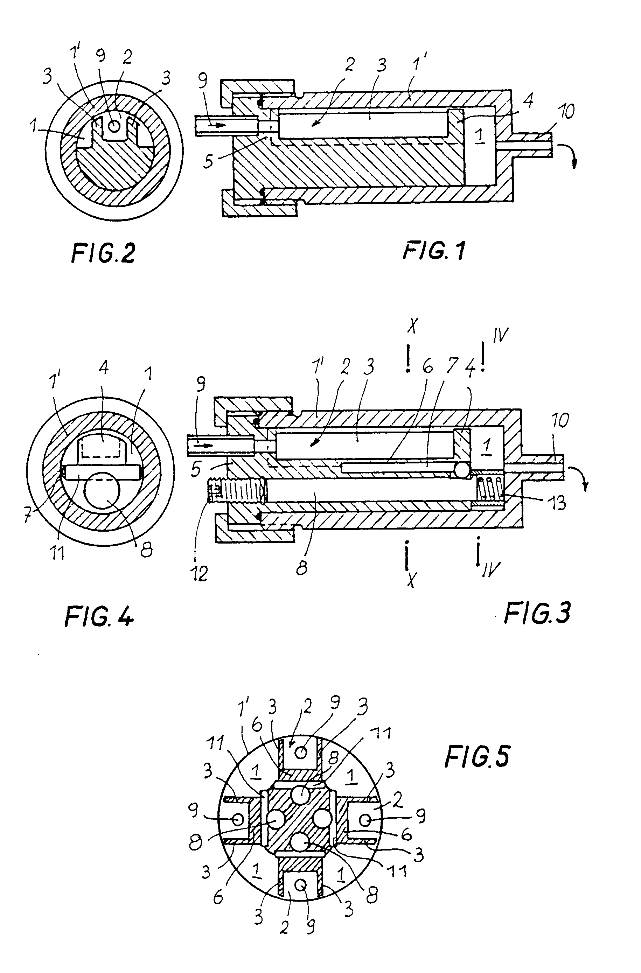

Beim Ausführungsbeispiel nach den Fig. 3 und 4 sind die entsprechenden Teile des Regelventiles mit gleichen Bezugszeichen versehen. Wie aus der Fig. 3 ersichtlich, ist unterhalb des Kammerbodens 6 ein Einschnitt 7 vorgesehen, der parallel zum Kammerboden verläuft. Im Bereich der freien Ausmündung des Einschnittes 7 liegt der die Kammer aufweisende Teil des Ventilkörpers auf einer Unterstützung 11 auf. Im vorliegenden Fall ist die Unterstützung 11 durch eine Rolle gebildet, welche durch einen Verstellstift 8 in Anlage am Kammerboden gehalten ist. Dieser Verstellstift ist konisch ausgebildet und in Axialrichtung mittels einer Schraube 12 verstellbar. Durch Verdrehen der Schraube 12 wird der Stift 8 in Axialrichtung verstellt, wodurch zufolge der Konizität desselben die Walze 11 in radialer Richtung zum Stift verstellt wird. Mit 13 ist die Rückstellfeder für die Bewegung des Stiftes 8 bezeichnet.

Bei Normalbetrieb des Regelventiles läuft der Regelvorgang so wie beim Ausführungsbeispiel zu den Fig. 1 und 2 geschildert ab. Es besteht jedoch bei dem vorliegenden Ausführungsbeispiel noch die Möglichkeit, die Größe des Spaltes zwischen der Endwand 4 und der Zylindermantelfläche 1′ so einzustellen, daß die gewünschte Dämpfung erreicht wird. Bei Ansteigen des Druckes innerhalb der Kammer 2 tritt der bereits anläßlich der Fig. 1 und 2 beschriebene Effekt auf, daß sich die Lamellen 3 zur Zylindermantelfläche 1′ hin bewegen und damit den freien Durchtrittsquerschnitt von der Kammer 2 in den Raum 1 verringern. Steigt nun bei vorliegendem Ausführungsbeispiel der Druck über einen bestimmten Wert an, dann biegt sich die gesamte Kammer 2 im Bereich des Einschnittes 7 durch, wodurch die der Zylindermantelfläche 1′ benachbarten Kanten der Lamellen von der Zylindermantelfläche 1′ im Durchbiegungsbereich wegbewegt werden, so daß in diesem Bereich eine zusätzliche Durchtrittsmöglichkeit für die Flüssigkeit geschaffen ist. Letzteres ist beispielsweise dann angezeigt, wenn durch das Regelventil verhindert werden soll, daß sich in der Flüssigkeitszufuhr 9 ein übergroßer Druck aufbaut, welcher gegebenenfalls zu Beschädigungen der dem Regelventil vorgeschalteten Teile führen könnte.

Anstelle des durch die Schraube und die Feder 9 betätigbaren Verstellstiftes 8 könnte auch eine durchgehende Schraube, die einen Konus betätigt, oder ein Exzenter vorgesehen sein.

Beim Ausführungsbeispiel nach Fig. 5 handelt es sich um eine Mehrfachausführung, bei welcher vier derartige Kammern 2 in einem zylindrischen Raum 1 angeordnet sind. Die Kammern 2 sind in gleicher Weise aufgebaut wie die in Fig. 3 wiedergegebene Kammer. Bei diesem Ausführungsbeispiel ist der Verstellstift für jede Kammer einzeln und gesondert betätigbar, so daß für jede der in Fig. 5 wiedergegebenen Kammern 2 unterschiedliche Drosselbedingungen geschaffen werden können.

Das erfindungsgemäße Regelventil kann in besonders vorteilhafter Weise in den Kolben einer hydraulischen Kolben-Zylinder-Einheit einer Dämpfungseinrichtung eingebaut werden, und zwar deshalb, weil die Ausbildung aufgrund des erfindungsgemäßen Aufbaues nur wenig Platz benötigt.

## Patentansprüche

1. Regelventil zur Steuerung des Durchflusses von Flüssigkeiten, wobei innerhalb eines mit Zulauf (9) und Ablauf versehenen Raumes (1), der, zumindest über Teile des Umfangsbereiches, durch eine Zylindermantelfläche (1'), vorzugsweise mit kreiszylindrischem Querschnitt, begrenzt ist, ein Drosselorgan in Form deformierbarer Wände einer druckbeaufschlagten Kammer (2) vorgesehen ist, dadurch gekennzeichnet, daß der Zulauf (9) an der Kammer (2) angeschlossen ist und daß diese Kammer (2) durch zwei flexible, im wesentlichen parallel zu den Erzeugenden der Zylindermantelfläche (1') verlaufende, bis nahe zu letzterer reichende Lamellen (3) und zwei Endwandungen (4) begrenzt ist, wobei die dem Flüssigkeitsabfluß (10) nächstliegende Endwandung (4) und die Lamellen (3) mit der Zylindermantelfläche (1') einen veränderbaren Spalt definieren.

2. Regelventil nach Anspruch 1, dadurch gekennzeichnet, daß die Kammer (2) in einem Ventilkörper ausgebildet ist, der in den durch die Zylindermantelfläche (1′) begrenzten Raum (1) eingesetzt ist, wobei der Ventilkörper unterhalb des Kammerbodens (6) einen Einschnitt (7) aufweist, der vorzugsweise parallel zum Kammerboden (6) verläuft.

3. Regelventil nach Anspruch 2, dadurch gekennzeichnet, daß der die Kammere (2) aufweisende Teil des Ventilkörpers im Bereich der freien Ausmündung des Einschnittes (7) unterstützbar ist.

4. Regelventil nach Anspruch 3, dadurch gekennzeichnet, daß die Unterstützung (11) des die Kammer (2) aufweisenden Teiles des Ventilkörpers quer zur Achsrichtung im Sinne einer Veränderung des Spaltes zwischen der dem Flüssigkeitsabfluß (10) nächstliegenden Endwandung (4) und der Zylindermantelfläche (1′) einstellbar ist.

5. Regelventil nach einem der Ansprüche 2 bis 4, dadurch gekennzeichnet, daß in dem Ventilkörper mehrere, gleich aufgebaute Kammern (2) vorgesehen sind.

6. Regelventil nach Anspruch 5, dadurch gekennzeichnet, daß jede der Kammern (2) mit einem Einschnitt (7) unterhalb des Kammerbodens (6) versehen ist, wobei vorzugsweise unter jeder Kammer (2) eine einstellbare Unterstützung (11) angeordnet ist, welche jede gegebenenfalls getrennt betätigbar ist.

## Claims

1. Control valve for controlling the throughflow of liquids, a restrictor in the form of deformable walls of a pressurised chamber (2) being provided within a space (1) which is provided with an inflow (9) and outflow and is bounded, at least over parts of the circumferential area, by a cylinder lateral surface (1'), preferably of circular cross-section, characterised in that the inflow (9) is connected to the chamber (2) and in that this chamber (2) is bounded by two flexible lamellae (3), extending essentially parallel to the generating lines of the cylinder lateral surface (1') and reaching almost up to the latter, and two end walls (4), the end wall (4) closest to the liquid outflow (10) and the lamellae (3) defining a variable gap with the cylinder lateral surface (1').

2. Control valve according to Claim 1, characterised in that the chamber (2) is formed in a valve body which is inserted into the space (1) bounded by the cylinder lateral surface (1'), the valve body having underneath the chamber bottom (6) an incision (7) which preferably runs parallel to the chamber bottom (6).

3. Control valve according to Claim 2, characterised in that the part of the valve body having the chamber (2) is able to be supported in the area of the free discharge opening of the incision (7).

4. Control valve according to Claim 3, characterised in that the support (11) of the part of the valve body having the chamber (2) is able to be adjusted transversely to the axial direction in the sense of a variation of the gap between the end wall (4) closest to the liquid outflow (10) and the cylinder lateral surface (1').

5. Control valve according to one of Claims 2 to 4, characterised in that a plurality of identically constructed chambers (2) are provided in the valve body.

6. Control valve according to Claim 5, characterised in that each of the chambers (2) is provided with an incision (7) underneath the chamber bottom (6), there preferably being arranged under each chamber (2) an adjustable support (11), each of which is capable if need be of being actuated separately.

## Revendications

1. Vanne de régulation destinée à réguler l'écoulement de liquides, dans laquelle un organe d'étranglement sous forme de parois déformables d'une chambre sous pression (2) est prévu à l'intérieur d'un volume (1) pourvu d'une amenée (9) et d'une sortie qui, au moins sur une partie de sa circonférence, est limité par une surface latérale de cylindre (1') de section cylindrique circulaire de préférence, caractérisée en ce que l'amenée (9) débouche dans la chambre (2), et en ce que cette chambre (2) est limitée par deux parois terminales (4) et deux lamelles flexibles (3), sensiblement parallèles aux génératrices de la surface latérale de cylindre (1') et s'étendant jusqu'à proximité de cette dernière, la paroi terminale (4) la plus proche de la sortie de liquide (10) et les lamelles (3) définissant avec la surface latérale de cylindre (1') une fente modifiable.

2. Vanne de régulation selon la revendication 1, caractérisée en ce que la chambre (2) est conformée en corps de vanne inséré dans le volume (1) limité par la surface latérale de cylindre (1'), le corps de vanne présentant, sous le fond (6) de la chambre, une encoche (7) qui s'étend de préférence parallèlement au fond (6) de la chambre.

3. Vanne de régulation selon la revendication 2, caractérisée en ce que la partie du corps de vanne comportant la chambre (2) peut être soutenue dans la zone du débouché vers l'extérieur de l'encoche (7).

4. Vanne de régulation selon la revendication 3, caractérisée en ce que le support (11) de la partie du corps de vanne comportant la chambre (2) est réglable transversalement à la direction de l'axe, au sens d'une modification de la fente existant entre la paroi terminale (4) la plus proche de la sortie de liquide (10) et la surface latérale de cylindre (1').

5. Vanne de régulation selon l'une des revendications 2 à 4, caractérisée en ce que plusieurs chambres (2) de structure similaire sont prévues dans le corps de vanne.

6. Vanne de régulation selon la revendication 5, caractérisée en ce que chacune des chambres (2) est pourvue d'une encoche (7) sous le fond (6) de la chambre, un support (11) réglable étant disposé de préférence sous chacune des chambres (2), et chaque support pouvant être actionné de façon séparée le cas échéant.
